(19) Europäisches Patentamt / European Patent Office / Office européen des brevets

(11) **EP 3 944 769 B1**

(12) **EUROPEAN PATENT SPECIFICATION**

(45) Date of publication and mention
of the grant of the patent:
**03.09.2025  Bulletin 2025/36**

(21) Application number: **20188554.8**

(22) Date of filing: **30.07.2020**

(51) International Patent Classification (IPC):
**A23J 3/22** $^{(2006.01)}$

(52) Cooperative Patent Classification (CPC):
**A23J 3/22; A23J 3/227;** A23V 2200/262

(54) **PATATIN AS BINDER IN MEAT SUBSTITUTES**

PATATIN ALS BINDEMITTEL IN FLEISCHERSATZSTOFFEN

PATATINE COMME LIANT DANS LES SUBSTITUTS DE VIANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.02.2022  Bulletin 2022/05**

(73) Proprietor: **Coöperatie Koninklijke Avebe U.A.
9641 GK Veendam (NL)**

(72) Inventors:
• **SPELBRINK, Robin Eric Jacobus
9641 GK Veendam (NL)**
• **SEEGERS, Christina Lamberta Catharina
9641 GK Veendam (NL)**
• **STANISIC, Nikola
9641 GK Veendam (NL)**
• **CHEN, Zhenghong
9641 GK Veendam (NL)**

(74) Representative: **V.O.
P.O. Box 87930
2508 DH Den Haag (NL)**

(56) References cited:
EP-A1- 3 508 067          WO-A1-2008/069650
WO-A1-2014/007621     WO-A1-2018/183770
WO-A1-2018/185318     WO-A1-2019/088834

• **ROBIN E. J. SPELBRINK ET AL: "Potato Patatin
Generates Short-Chain Fatty Acids from Milk Fat
that Contribute to Flavour Development in
Cheese Ripening", APPLIED BIOCHEMISTRY
AND BIOTECHNOLOGY, vol. 176, no. 1, 27 March
2015 (2015-03-27), New York, pages 231 - 243,
XP055648817, ISSN: 0273-2289, DOI: 10.1007/
s12010-015-1569-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 3 944 769 B1

**Description**

**Background**

Meat products are an important source of proteins, but are associated with many disadvantages. They pose a high burden on the environment, compromise animal welfare and have the potential to cause negative health effects in humans (e.g. high cholesterol, saturated fat). Therefore, vegan and vegetarian diets have become increasingly more popular, which trend has fueled the research to develop further alternatives for meat.

Nowadays, appropriate vegetarian and vegan alternatives to real meat products are available, which are typically comprised of plant proteins such as textured vegetable protein (TVP) and plant-based lipids, bound together with a suitable binder. The binder plays a crucial role as the binder should effectively bind the ingredients together such that the product can be shaped into a desired form. Further, the binder should allow formation of a product which can be transported and stored, and which allows for cooking the product.

Two generic types of meat substitutes may be distinguished. One type of meat substitute is the ready-to-eat type, which is cooked during the production process. This type of product can be consumed as-is or after reheating, by a final consumer.

The second type of meat substitute is the "raw-type" meat substitute. A raw-type meat substitute mimics animal-derived meat in that it has not been cooked during production. A heating step prior to consumption is necessary. Normally, raw-type meat substitutes undergo a change in appearance during cooking; they may "bleed" such as described in WO2017/070303, and will brown and display Maillard-type reactions similar to animal-derived meat, mimicking cooking with animal-derived meat.

A raw-type meat substitute is considered more attractive than a ready-to-eat type meat substitute, because the barrier for meat eaters to switch to a raw-type meat substitute is conceived as lower. In addition, flavor, texture, and appearance of a raw-type meat substitute is considered more attractive. However, raw-type meat substitutes pose additional challenges to the product in terms of flavor, composition and shelf life.

Various binders for meat substitutes are known. Binders may be starch-based, protein based or based on gums or hydrocolloids, among others. Among the types of binders, protein binding is considered attractive because it increases protein content, and because it results in a relatively natural flavor and mouth feel.

Binding of food products with protein is a known concept. For example, WO 2008/069650 describes that a total potato protein isolate may be used in vegetarian meat analogues to bind fatty ingredients and/or water. WO 97/042834 also describes how undenatured potato protein can be used as a binder in various food products. WO 2020/089445 describes how meat analogue products may be prepared using a mixture of native potato protein and a dietary fiber as a binder. However, these three publications fail to specify how binding with native protein affects taste upon storage, and there is no recognition that various types of potato protein may have different effects when so used.

It is well known that there are various types of protein which are suitable as binder. One very attractive potential protein binder is patatin, as patatin has high gel strength at relatively low concentration. Patatin makes up about 40% of the protein in potato tubers (Solanum tuberosum), and naturally functions as a storage protein. Patatin was known to have good gelling and emulsification properties, and binding of food products in general with patatin is known. For example, WO 2008/069650 describes the isolation of native patatin from potato, and its use as a gelling protein and/or emulsifier in various food products. However, it has not been recognized that use of patatin results in a less than ideal taste stability, due to the development of off-flavors. Similarly, WO 2019/088834 describes the use of a carboxy methyl cellulose complex of different types of native potato protein, which can be used in meat analogues. However, also here the effects on taste stability of using the various types of potato protein have not been recognized. WO2018/175318 discloses to use off-note blockers in meat analogues.

Patatin has been known to hydrolyze phospholipids and monoglycerides, but does not generally have hydrolytic activity on triglycerides (see for instance Hirschberg et al, Eur. J. Biochem 2001, 268, 5037, Galliard et al., Biochem. J. 1971, 121, 379 or Andrews et al, Biochem J. 1988, 252, 199). Patatin has however been described as having specific but low activity against triglycerides with short chain fatty acids, which is advantageous for the development of cheese flavor (WO 2014/007621). However, most common plant-based lipids do not comprise such short-chain fatty acids. In fact, most plant based lipids generally comprises only fatty acids having a chain length of C8 or longer.

**The invention**

The inventors found that the use of native patatin as a binder in lipid-containing food products results in formation of off-flavors during storage, and that off-flavor formation can be prevented by preparing the meat substitute using only particular types of lipid. This results in a long shelf-life, such as up to 14 days, or longer (if frozen).

This advantage can be realized by the invention, which provides a method for making a meat substitute, comprising

a) providing a mixture comprising water, a denatured plant protein, native patatin and a lipid, which lipid is defined as a substance comprising fatty acid tri-esters of glycerol;

b) shaping the meat substitute; and

c) cooling the meat substitute to a temperature of from -35 °C to 20 °C;

wherein the fatty acids in said lipid comprise less than 2 % by mass of fatty acids having a chain length of C12 or less, and wherein the lipid comprises one or more of the lipids in the group of corn oil, soybean oil, sunflower oil, grape seed oil, peanut oil, sesame oil, olive oil, shea butter, cocoa butter, and ricebran oil.

A meat substitute, in the present context, is a product which resembles animal-derived meat, but which is prepared using mainly plant-based ingredients. A meat substitute is thus suitable for vegetarians, and may depending on the actual ingredients used, also be suitable for a vegan lifestyle.

A vegetarian meat substitute is a meat substitute which does not include meat derived from a mammal or a bird, but which may include meat derived from a fish or a crustacean such as shrimp or shellfish, and which may furthermore include non-meat animal derived products (products which do not require scarification of animals), such as milk, cream or egg. In preferred embodiments, a vegetarian meat substitute comprises no meat which has been derived from a mammal, bird, fish or crustacean, but which may comprise non-meat animal-derived products such as milk, cream or egg.

A vegan meat substitute is a meat substitute which does not include any animal-derived products. A vegan meat substitute comprises only plant-based ingredients.

Preferably, the meat substitute is a non-meat analogue of a burger, meatball, sausage, minced meat, schnitzel, skewer, nugget, rib, filet or meat chunk.

In order to obtain the meat substitute of the invention, first, a mixture is provided comprising water, a denatured protein, native patatin and a lipid. Preferably, the mixture comprises at least 20 wt.% of water, more preferably 30 - 85 wt.%, even more preferably 48 - 65 wt.%, even more preferably 51 - 61 wt.%, relative to the total weight of the mixture.

The denatured protein can be any non-meat protein, including (for certain vegetarian products) fish or crustacean derived protein. Preferably however, the denatured protein is a denatured plant protein. Denatured protein is preferably present at a quantity of 3 - 35 wt.%, preferably 10 - 30 wt.%, more preferably 15 - 26 wt.%, even more preferably 18 - 24 wt.%, relative to the total weight of the mixture.

The denatured plant protein is preferably a protein derived a tuber, cereal, nut or legume. In particularly preferred embodiments, the protein is selected from the group consisting of soy protein, pea protein, wheat protein/ gluten, potato protein, faba bean protein, mungbean protein, hemp seed protein, mushroom protein, sesame seed protein, sweet potato protein, chick pea protein, lentil protein, oat protein and spelt protein, most preferably soy protein or pea protein. The denatured plant protein is preferably a coagulated protein, such as a protein obtained by acid or heat coagulation. The skilled person can obtain denatured plant protein by generally known methods.

In much preferred embodiments, the denatured plant protein is a texturized plant protein. Texturized plant protein is well-known, and commercially available. Texturized plant protein is a plant-based protein which has been subjected to a step of extrusion, which provides the protein with a meat-like fibrous structure. In much preferred embodiments, the texturized plant protein is a texturized pea protein, a texturized soy protein, a texturized potato protein or a texturized gluten.

Native patatin is a protein which occurs in tubers, such as tubers of potato (Solanum tuberosum). The skilled person is aware which of the protein in a tuber can be considered patatin.

Patatin is a protein which is naturally present in the tuber as storage protein. Storage protein is protein which functions as a store for nitrogen, sulphur and/or carbon, enabling the plant to survive periods of adverse growth conditions or between growing seasons. Storage protein is generally present in a quantity of 40 - 50 wt.% of all protein in the tuber. Storage protein can generally be characterized by a molecular weight of 35 - 50 kDa, preferably 38 - 45 kDa and/or by an isoelectric point of 4.8 - 5.6. The molecular weight can be determined by commonly known methods, such as SDS page. The isoelectric point can also be determined by commonly known methods, such as for example isoelectric focusing.

In the present context, native patatin is preferably provided to the mixture in the form of a protein isolate comprising native patatin. In a preferred embodiment, the protein isolate comprising native patatin is a native tuber protein isolate, preferably a native potato protein isolate. In said native tuber protein isolate, protein is preferably present in a quantity of at least 75 wt.%, preferably at least 85 wt.%, relative to dry matter.

In preferred embodiments, the native tuber protein isolate, such as the native potato protein isolate, comprises, by wt.% of total protein, at least 35 wt.% of potato storage protein, preferably at least 40 wt.%. In embodiments where there is from 35 up to 60 wt.% of potato storage protein, relative to total protein, the tuber protein isolate can be called a total tuber protein isolate.

In further preferred embodiments, the native tuber protein isolate, such as the native potato protein isolate, comprises, by wt.% of total protein, at least 75 wt.% of potato storage protein, preferably at least 80 wt.%. In embodiments where there is 60 wt% or more up to 85 wt.% of potato storage protein, relative to total protein, the tuber protein isolate can be called a HMW isolate comprising patatin.

In further preferred embodiments, the native tuber protein isolate, such as the native potato protein isolate, comprises, by wt.% of total protein, at least 90 wt.%, more preferably at least 95 wt.% of potato storage protein. In embodiments where there is 90 wt% or more up to and including 100 wt.% of potato storage protein, relative to total protein, the tuber protein isolate can be called a patatin isolate.

Native patatin is preferably present in a quantity of 1 - 15 wt.%, preferably 2 - 10 wt.%, more preferably 2.5 - 7.5 wt.%, relative to the total weight of the mixture.

Native patatin can be isolated from potato tubers, or from other potato-derived processing streams such as potato juice (for example the juice obtained as a side product in potato starch manufacturing), or potato cutting water (the processing water which is obtained when potatoes are being shaped for consumption as for example fries or chips). One particularly convenient method to isolate native patatin has been described in WO2008/069650, although the skilled person can obtain native patatin by other methods. In addition, native patatin is commercially available.

In preferred embodiments, native patatin is the sole native protein in the mixture, and in the final meat substitute. This has the advantage of providing good binding strength. In the present context, patatin being the sole native protein means that the mixture comprises 60 wt.% or more, preferably at least 90 wt.% or more, of potato storage protein, relative to all native protein. Thus, embodiments in which patatin is provided as a HMW isolate comprising patatin or, preferably, as a patatin isolate, are considered embodiments in which native patatin is present as the sole native protein. In particular the mixture preferably does not comprise native protease inhibitors.

In further preferred embodiments, native patatin is used in the state in which it occurs in nature. That is, native patatin is preferably not modified, such as by crosslinking or complexation.

The lipid to be included in the mixture is defined as a substance comprising fatty acid tri-esters of glycerol, as is known in the art. A fatty acid tri-ester of glycerol is also known as a triacyl glyceride (TAG), or as a triglyceride. Although the term lipid may sometimes be used to include various other glycerol esters, such as phospholipids or glycolipids, the term lipid in the present context is limited to fatty acid tri-esters of glycerol, that is, molecules based on glycerol which are esterified with fatty acids on all three hydroxyl units of the glycerol moiety.

The fatty acids in said lipid comprise less than 2 % by mass, preferably less than 1.5 % by mass, more preferably less than 1 % by mass, even more preferably less than 0.5 % by mass, of fatty acids having a chain length of C12 or less.

In preferred embodiments, the fatty acids comprise less than 2 % by mass, preferably less than 1.5 % by mass, more preferably less than 1 % by mass, even more preferably less than 0.5 % by mass of fatty acids having a chain length of C14 or less.

In further preferred embodiments, the fatty acids comprise less than 30 % by mass, preferably less than 25 % by mass, more preferably less than 20 % by mass, even more preferably less than 15 % by mass of fatty acids having a chain length of C16 or less.

In further preferred embodiments, the lipid is a substance wherein at least 92 % by mass, preferably at least 94 % by mass, more preferably at least 96 % by mass of the fatty acids are fatty acids having a chain length of C16 or higher.

In further preferred embodiments, the lipid is a substance wherein the total of C10 - C16 fatty acids is less than 35 % by mass, preferably less than 25 % by mass, even more preferably 18 % by mass, relative to the total fatty acids.

Lipids of the indicated chain length have been found to result in the advantage that the meat substitute does not develop off-flavor upon storage in the period between production and consumption. Native patatin, apparently has at least some activity on some lipids comprising fatty acids with a chain length of C10 or higher, at least to a sufficient extent to cause off-flavors. This activity is also present on some lipids comprising fatty acids with a chain length of C12 or higher, and even on some lipids comprising fatty acids with a chain length of C14 or higher. Even lipids comprising fatty acids with a chain length of C16 or higher can be hydrolyzed by patatin to a degree which is sufficient to cause off-flavors.

It is thus an insight underlying the invention that patatin exerts activity on triglycerides with chain lengths of from C8 to C16, to such an extent that this activity causes off-flavors.

The action of patatin may be hydrolytic, but may also be another, yet unknown enzymatic activity of patatin, which activity is suppressed by applying a lipid as defined in claim 1. The exact mechanism behind off-flavor formation in meat substitutes comprising patatin but using a different lipid than in claim 1 is at present not understood. The examples show however that formulating a meat substitute in line with claim 1 suppresses off-flavor formation.

Off-flavors in the present context are defined as a lingering bitter sensation upon ingestion, which is accompanied by a stingy smell that can be described as "paint" or "vomit". The lipids recited in claim 1 can be used to avoid off-flavor formation.

Off-flavor can preferably be determined by sensory evaluation. Off flavor can also be determined in model systems by measuring the release of free fatty acids and/or by measuring the para-anisidine value. In such cases, off-flavor can be defined as not present provided that the pAV of the lipid is maintained at 2 or less, preferably 1.5 or less, even more preferably 1 or less, and/or provided that the release of free fatty acids from the lipid is less than 50 mmol/kg oil, preferably less than 40 mmol./kg oil.

The lipid is preferably present in a quantity of 3 - 25 wt.%, preferably 5 - 18 wt.%, more preferably 8 - 15 wt.%, relative to the total weight of the mixture.

Lipids are plant-based lipids from the group of a nut oil, a fruit oil, corn oil, soybean oil, sunflower oil, grape seed oil, peanut oil, sesame oil, olive oil, shea butter, cocoa butter, and rice bran oil. Mixtures of different lipids may also be used. In optional embodiments, the lipid may be partially hydrogenated.

The lipid may colloquially be referred to as a fat or an oil. An oil in the present context is a lipid which is liquid or viscous at 20 °C (under atmospheric pressure). Liquid or viscous is a term which reflects the capability to flow under the influence of gravity.

Fat in the present context is a lipid which is solid at room temperature (20 °C) (under atmospheric pressure). Solid in this context is defined as the capability to maintain a particular shape for at least 24 hours in the absence of support. If pressure is applied above atmospheric pressure, a solid lipid may change shape, which changed shape can be maintained for at least 24 hours after the pressure has been applied, without support.

Preferably, the lipid is a fat or oil which has a melting point which is higher - 30 °C, more preferably higher than - 20 °C, even more preferably higher than -10 °C, even more preferably higher than -5 °C. The melting point of suitable lipids in the present context is generally known from for example text books, but may also be determined experimentally by heating the lipid slowly, and determining the temperature at which the lipid melts.

In preferred embodiments, the lipid of the invention is a lipid which is solid at temperatures in the range of from -35 °C to 20 °C, preferably of from -18 to 15 °C, more preferably of from 0 °C to 10 °C. Preferably, in this embodiment, the lipid has a melting point which is higher than 20 °C, more preferably higher than 25 °C, even more preferably higher than 30 °C. Using a lipid which is solid at room temperature has the advantage that the meat substitute can be provided with a meat-like appearance, and that shape of the meat substitute is maintained better.

In order to not affect bite and mouthfeel negatively, the lipid preferably has a melting point which is below 60 °C, preferably below 50 °C, more preferably below 45 °C , even more preferably below 40 °C.

Thus, the melting point of a lipid which is solid in the temperature range of from -35 °C to 20 °C is preferably in the range of 20 - 60 °C, more preferably 25 - 50 °C, even more preferably 30 - 45 °C, and most preferably 30 - 40 °C.

The lipid to be provided to the mixture is preferably as pure as possible.

That is, the quantity of free fatty acids ("FFA") in the lipid is preferably less than 18 mmol per kg lipid, more preferably less than 9 mmol per kg lipid, even more preferably less than 3 mmol per kg lipid. The quantity of free fatty acids in the lipid can be determined by a chemical titration method, as described below.

Additionally or alternatively, the quantity of diacylglycerols ("DAG") or monoacylglycerols ("MAG") in the lipid to be provided to the mixture is preferably less than 10 wt.%, more preferably less than 6 wt.%, even more preferably less than 4 wt.%, relative to the total lipid. The quantity of DAG and MAG in the lipid can be determined by column chromatography or capillary gas chromatography as described in "Standard Methods for the Analysis of Oils, Fats and Derivatives", 1st supplement to the 7th edition (IUPAC, 1987).

The mixture may generally be prepared by any conventional means, and may be prepared by mixing the ingredients in any order. In preferred embodiments, the denatured protein is mixed with part of the lipid, whereupon a second part of the lipid is added to obtain a homogenous mass which can be shaped by applying gentle pressure.

When the denatured protein is a texturized plant protein, it is preferred that the texturized protein is hydrated prior to providing the mixture. In such embodiments, the texturized plant protein is first mixed with water to effect hydration, and subsequently mixed with any other ingredients, as well as the lipid, or part of the lipid, as specified above. The mixture is preferably a homogenous mixture of the various ingredients.

In preferred embodiments, the mixture may additionally include various other ingredients, in order to enhance taste, appearance texture, mouthfeel and the like. Preferably, the mixture includes one or more salts, such as salts selected from the group consisting of sodium, potassium or calcium chloride, sodium or potassium glutamate and calcium sulfate. Salts may be present in a quantity of for example 0.1 - 5 wt.%, preferably 0.5 - 2.5 wt.%, relative to the total weight of the mixture. In much preferred embodiments, the mixture comprises 0.1 - 3 wt.% sodium chloride, preferably 0.5 - 2 wt.%, relative to the total weight of the mixture..

Also, the mixture may include pigments, such as heme-like pigment, red beet pigment, carotene, caramel, beet juice extract, tomato pigment, radish pigment, paprika pigment and amaranth. The quantity of pigment varies with the type of pigment used, and can be determined by routine experiments.

In preferred embodiments, the mixture furthermore includes one or more fibers, in particular dietary fibers, such as selected from the group consisting of potato fiber, sweet potato fiber, carrot fiber, psyllium fiber, bamboo fiber, soybean fiber, pea fiber, mungbean fiber, tapioca fiber, coconut fiber, banana fiber, cellulose, resistant starch, resistant dextrins, inulin, lignin, chitin, pectin, beta-glucan, and oligosaccharide. The quantity of fiber can be 0.1 - 10 wt.%, preferably 0.5 - 7.5 wt.%, more preferably 1 - 5 wt.%, relative to the total weight of the mixture.

Also, texturisers such as native starch, modified starch, cellulose derivatives, carrageenan, alginate, agar, konjac, xanthan, and pectin may be included in the mixture, preferably at a quantity of 1 - 10 wt.%, preferably 1.5 - 5 wt.%, relative to the total weight of the mixture.

Furthermore preferred is to include flavor development aids, such Maillard-active ingredients, among which for example dextrose, ribose and maltodextrin. Flavor development aids can be present in a quantity of 0.1 - 5 wt.%, preferably 0.2 - 2 wt.%, relative to the total weight of the mixture.

Also other flavorings can be present in the mixture, such as for example a sweetener selected from the group consisting of sucrose, glucose, fructose, syrup, and artificial sweeteners.

In preferred embodiments, the mixture, or the resulting meat substitute, does not comprise a hydrocolloid, such as alginate, agar, konjac, xanthan, pectin or carrageenan. In further preferred embodiments, the mixture, or the resulting meat substitute, does not comprise a gelling non-starch carbohydrate, such as such as cellulose derivatives, in particular methylcellulose or carboxy methyl cellulose. In further preferred embodiments, the mixture, or the resulting meat substitute, does not comprise a modified starch.

The ingredients of the mixture native patatin, lipid and protein can be present in various weight ratios. The weight ratio native patatin : lipid is preferably 1 : 1 - 1 : 5, more preferably 1 : 1 - 1 : 3. The weight ratio lipid : denatured protein is preferably 1 : 1 - 1: 5, more preferably 1 : 1 - 1 : 3. The weight ratio patatin : protein is preferably 1 : 1 - 1 : 10, more preferably 1 : 2 - 1 : 6. The weight ratio patatin : lipid : protein is thus preferably in the order of 1 : (1 - 3) : (2 - 6), preferably 1 : (1.5 - 2.5) : (3 - 4). The remainder of the mixture is water and optional further ingredients, as outlined elsewhere.

The mixture described above is subsequently shaped into a desired shape. The shape is determined by the type of meat substitute. Any shape can be used, although in order to attract consumer preference, the chosen shape is preferably customary for the type of meat substitute in question. For example, a burger may be shaped in round disk-like shape, a sausage may be provided with a cylindrical shape, and a meat ball with a globular shape.

Shaping can be achieved by any conventional means. Preferably however, shaping is achieved by introducing the mixture into a mold of the chosen shape. Preferably, the mixture is introduced into the chosen mold, and subsequently pressed to attain a dense structure similar to animal-derived meat.

The mixture is subsequently cooled to a temperature of from -35 °C to 20 °C, preferably of from -18 to 15 °C, more preferably of from 0 °C to 10 °C, more preferably 0 - 5 °C. Cooling results in gelation of the native patatin, and thus has the effect that the shape of the meat substitute can be maintained also without the mold. Cooling may be achieved by any conventional means. Refrigeration is preferred. If cooling is performed to a temperature below 0 °C, it is preferred that cooling is performed in two steps: first to a temperature of 0 - 20 °C to effect gelation of the patatin, and subsequently to a lower temperature.

In much preferred embodiments, the method of the invention results in a raw-type meat substitute. In this embodiment, the meat substitute is not heated to a temperature above 60 °C prior to cooling. Instead, the meat substitute is cooled and generally maintained at the temperature of from -35 °C to 20 °C, preferably of from -18 to 15 °C, more preferably of from 0 °C to 10 °C, more preferably 0 - 5 °C, throughout the period until cooking the meat substitute. This period is the period between the production of the meat substitute and its consumption. In this period, the meat substitute is transported from the production location, to various retail shops, to the end consumer. This period is preferably 1 - 14 days. This is in particular true in embodiments where cooling is generally maintained at temperatures between 0 °C to 15 °C.

In embodiments where cooling is maintained at temperatures below 0 °C for a longer time, the period until cooking may be prolonged by the time during which the temperature was below 0 °C. The time during which the temperature is maintained below 0 °C is called the freezing time, and the freezing time may be any time, such as of from one day to three years, preferably one week to one year.

Only when the meat substitute arrives at the end consumer, the burger is cooked, such as at a temperature of at least 75 °C for a period of at least 1 minute.

In case the method is performed to obtain a ready-to-eat type meat substitute, the burger is cooked after shaping. Cooking in this case means heating to a temperature of at least 75 °C for a period of at least 1 minute.

The invention furthermore provides a meat substitute, comprising water, native patatin, a denatured protein and a lipid, which lipid is defined as a substance comprising fatty acid tri-esters of glycerol, wherein the fatty acids in said lipid comprise less than 2 % by mass of fatty acids having a chain length of C12 or less, and wherein the lipid comprises one or more of the lipids in the group of a nut oil, a fruit oil, corn oil, soybean oil, sunflower oil, grape seed oil, peanut oil, sesame oil, olive oil, shea butter, cocoa butter, and ricebran oil. Preferably, the fatty acids in the lipid comprise less than 2 % by mass of fatty acids having a chain length of C14 or less. Further preferably, the fatty acids in the lipid comprise less than 30 % by mass of fatty acids having a chain length of C16 or less.

The meat substitute comprises the ingredients water, native patatin, a denatured protein and a lipid. These ingredients have been described above in the context of the method, but the described features and definitions in the context of the method equally pertain to the meat substitute of the invention. The above description of providing the mixture allows to infer the composition of the final meat substitute, as the quantities and character of all the different ingredients are not affected by the preparation method.

Thus, summarizing the above without repeating all details, at least 92 % by mass of the fatty acids in the lipid are fatty acids having a chain length of C16 or higher. Much preferred lipids are lipids in which less than 30 % by mass of the fatty acids are fatty acids having a chain length of C10 - C16. The lipid in the meat substitute comprises one or more of the lipids in the group of corn oil, soybean oil, sunflower oil, grape seed oil, peanut oil, sesame oil, olive oil, shea butter, cocoa butter, and rice bran oil, which lipids may optionally have been hydrogenated.

The denatured plant protein is preferably a protein derived a tuber, cereal, nut or legume. In particularly preferred embodiments, the protein is selected from the group consisting of soy protein, pea protein, wheat protein/ gluten, potato protein, faba bean protein, mungbean protein, hemp seed protein, mushroom protein, sesame seed protein, sweet potato protein, chick pea protein, lentil protein, oat protein and spelt protein, most preferably soy protein or pea protein. Preferably, the protein is a texturized plant protein.

The meat substitute comprises less than 18 mmol per kg lipid of free fatty acids and alternatively or additionally have a total of diacylglycerols and monoacylglycerols, relative to the total lipid, of less than 10 wt.%.

The meat substitute may furthermore comprise various optional ingredients, such as one or more salts, such as a salt selected from the group consisting of sodium, potassium or calcium chloride, sodium or potassium glutamate and calcium sulfate, and/or one or more pigments, such as a pigment selected from the group consisting of heme-like pigment, red beet pigment, carotene, caramel, beet juice extract, tomato pigment, radish pigment, paprika pigment and amaranth, and/or one or more fibers, such as a fiber selected from the group consisting of potato fiber, sweet potato fiber, carrot fiber, psyllium fiber, bamboo fiber, soybean fiber, pea fiber, mungbean fiber, tapioca fiber, coconut fiber, banana fiber, cellulose, resistant starch, resistant dextrins, inulin, lignin, chitin, pectin, beta-glucan, and oligosaccharide, and/or one or more texturizers such as a texturizer selected from the group consisting of native starch, modified starch, cellulose derivatives, carrageenan, alginate, agar, konjac, xanthan, and pectin, and/or one or more flavor development aids selected from the group consisting of dextrose, ribose and maltodextrin, and/or one or more flavorings, such as a sweetener selected from the group consisting of sucrose, glucose, fructose, syrup, and artificial sweeteners.

The meat substitute of the invention preferably comprises patatin as the sole native protein. That is, the meat substitute preferably does not comprise other types of native protein than patatin, such as for example potato-derived protease inhibitor, or other types of native protein.

## **Examples**

*Chemicals*

The patatin used is commercially available (Solanic 200®, Avebe). Potato fiber was Paselli FP from Avebe.

Lipids which are solid at room temperature were 100 % pure coconut oil (KTC); 100 % red palm oil (Aman Prana); hydrogenated rapeseed oil; commercial vegetable oil A; commercial vegetable oil B, commercial oil palm stearin flakes and commercial shea butter.

Lipids which are liquid or viscous at 20 °C were sunflower oil (Reddy); Olio di Sansa di Oliva (olive oil, Kalliston); corn oil (Olitalia); soybean oil (Levo); grapeseed oil (Saveurs de Lapalisse); rapeseed oil (Your Organic Nature); 100 % pure sesame oil (Chee Seng); peanut oil (Heuschen & Schrouff) and rice oil (Alesie).

Texturized vegetable protein in the experiments was texturized soy protein: Soprotex N (Barentz).

*Equipment for emulsification*

When the experiments denote "emulsification", a T18 Ultraturrax with T18N (10 or 19 g) disperging tool or a T25 Ultraturrax with T25N (8g) disperging tool from IKA were used. Results with the two types of equipment are identical. In addition, an Analog vortex mixer from VWR was used, and a Multifuge 1S-R or X3R benchtop centrifuge from Thermo Scientific. For weighing, a BP3100 S balance from Satorius was used.

*Incubation of patatin with lipids and extraction of the lipid*

A patatin solution was prepared of 3.3 % in demineralized water. Solid lipids were melted at 50 or 60 °C, except for palm stearin flakes, which were used in solid form. The lipid was added in a 1:1 (w/w) ratio to the patatin solution or to demineralized water, which served as a control. The solutions were mixed by turrax for 1 minute at about 10.000 rpm, except for palm stearin flakes. Then, the solutions were left at room temperature overnight under gently shaking so that release of fatty acids and fat oxidation could occur.

Subsequently hexane was added in a quantity of about 5 ml per 2-gram solution, and the sample was vortexed several times in a time frame of 30 minutes to extract the lipids from the aqueous phase. Subsequently, the layers were separated by centrifugation (5 minutes, 4700 rpm, swing-out). The hexane layer (top layer) was used for determination of free fatty acids and/or pAV. The protocol above was followed unless indicated otherwise.

*Determination of free fatty acid formation*

Patatin cleaves the ester linkage between a fatty acid and the glycerol core, producing free fatty acids. Titrimetry was used to determine the free fatty acid content of mixtures of patatin and a lipid after hexane extraction. The method is based on chemical titration method published by the Cyberlipid Center (Leray).

A solvent mixture (ethanol / tert-Butyl methyl ether, 1/1, v/v) was prepared and 10 ml phenolphthalein solution was added. As titrant a 10 mM KOH in ethanol solution was prepared. The hexane layer of the oil phase was transferred by a glass pipet to a 100 ml Erlenmeyer with cap. Solvent mixture was added to obtain approximately 30 - 50 ml solution. Titrant was added while stirring the solution on a magnetic stirrer to the end point of the indicator (light purple colour persisting for few seconds). The amount of titrant added was determined by weighting the Erlenmeyer before and after titrant addition. The weight was used to calculate the mmol alkaline / kg of oil was used. The value was corrected for the blank.

$$Equation = \frac{m_{titrant} * M_{titrant}}{m_{oil}} * 1000 = mmol\ KOH\ /\ kg\ oil$$

in which $m_{titrant}$ is mass of titrant added to sample in g, $M_{titrant}$ is the molar mass in mmol KOH / g titrant and $m_{oil}$ is the mass of oil in the sample in g.

*Determination of para-anisidine value (pAV) of lipids*

Secondary oxidation products were determined by measuring the para-Anisidine value (pAV) according to the method of the American Oil Chemists Society (AOCS, 2004, Official method Cd. 18-90 in: Official methods and recommended practices of the American Oil Chemists Society). This method detects fatty aldehydes, in particular unsaturated ones. The p-anisidine value is defined as 100 times the optical density measured at 350 nm in a 1 cm cuvette of a solution containing 1.00 g of the oil in 100 mL of a mixture of solvent and para-anisidine reagent (20 mM para-anisidine, SigmaAldrich A88255).

*Determination of fatty acid composition by gas chromatography*

The fatty acid composition of a lipid was determined by GC, on the basis of full lipid hydrolysis and conversion of the fatty acids to methyl esters.

A lipid sample of about 5 mg was weighed in a 20 ml glass tube, to which there was added 2 ml methanol containing 50M NaOH. The tube was closed, and incubated for 30 min at 70 °C in a block heater. After cooling to room temperature, 3 ml 20% $BF_3$ reagent in MeOH was added to the tube, effecting methylation of the fatty acids to obtain fatty acid methyl esters (FAME's).

The samples were cooled to room temperature, whereupon 5 ml saturated aqueous NaCl and 2.5 ml n-hexane was added. The tube was closed and vortexed for 1 min and mixed for 15 min with a test tube rotator. From the top hexane layer, there was taken 2 ml, which was transferred to the GC.

| Column | Stabil Wax-Da, 30m x 0.32 mm, 0.25 μm | |
|---|---|---|
| **Oven** | 50 °C for 2 min, ramp 16 °C/ min to 250 °C and hold 13 min isotherm at 250 °C | |
| **injector** | PTV 250 °C, flow: 1.2 ml/min, splitless flow: 50 ml/min, splitless time:0.8min | |
| **Run Time** | Total run time is 30 min. | |
| **Injection volume** | 1 μl | |
| **MS** | Fullscan(TIC)= 30- 450 amu, dwell/scan time:0.2 see | |
| **Retention time FAME's (FA) (minute)** | FA_C12:0 10,63<br>FA_C14:0 12,03<br>FA_C16:0 13,29<br>FA_C18:0 14,46<br>FA_C18:1 14,63<br>FA_C18:2 14,91 | FA_C18:3 15,32<br>FA_C20:0 15,70<br>FA_C20:1 15,90<br>FA_C22:0 17,39<br>FA_C22:1 17,69<br>FA_C24:0 19,90 |

**Example 1: determination of the fatty acid composition of various lipids.**

Lipids were purchased as indicated. The fatty acid composition of the lipids was determined following the protocol described above. The results are shown in table 1.

Table 1: fatty acid composition of various lipids.

| oil | Coconut | Palm kernal | Red palm | Palm stearin | Rice oil | Corn | Soy bean | Grape-seed | Sesam | Pea nut | Rape seed | Sunflower | Olive | shea butter | Veg oil B | Veg oil A |
|---|---|---|---|---|---|---|---|---|---|---|---|---|---|---|---|---|
| FA | % (m/m) | % (m/m) | % (m/m) | % (m/m) | % (m/m) | % (m/m) | % (m/m) | % (m/m) | % (m/m) | % (m/m) | % (m/m) | % (m/m) | % (m/m) | % (m/m) | % (m/m) | % (m/m) |
| C4:0 | ND | ND | ND | ND | ND | ND | ND | ND | ND | ND | ND | ND | ND | ND | ND | ND |
| C6:0 | ND | ND | ND | ND | ND | ND | ND | ND | ND | ND | ND | ND | ND | ND | ND | ND |
| C8:0 | 12.5 | 5.0 | ND | ND | ND | ND | ND | ND | ND | ND | ND | ND | ND | ND | ND | ND |
| C10:0 | 10.5 | 48.0 | ND | ND | ND | ND | ND | ND | ND | ND | ND | ND | ND | ND | ND | ND |
| C12:0 | 29.7 | 16.0 | 1.3 | ND | 0.9 | ND | ND | ND | ND | ND | ND | ND | ND | ND | ND | 0.6 |
| C14:0 | 16.7 | 8.0 | 3.6 | 4.1 | 0.9 | ND | ND | ND | ND | ND | ND | ND | ND | ND | ND | ND |
| C16:0 | 10.4 | 2.0 | 35.8 | 39.6 | 19.4 | 16.9 | 15.0 | 12.8 | 14.0 | 10.5 | 8.3 | 11.5 | 17.3 | 10.0 | 8.7 | 10.1 |
| C18:0 | 5.0 | 15.0 | 8.5 | 13.4 | 4.9 | 4.6 | 6.6 | 9.2 | 11.8 | 4.3 | 21.1 | 9.0 | 7.7 | 41.4 | 30.2 | 20.0 |
| C18:1 | 9.1 | ND | 32.5 | 26.0 | 32.9 | 31.2 | 24.7 | 24.2 | 33.8 | 42.8 | 27.6 | 32.5 | 46.9 | 32.9 | 40.4 | 50.0 |
| C18:2 | 3.7 | ND | 14.0 | 11.0 | 26.9 | 40.1 | 37.4 | 48.7 | 32.3 | 16.9 | 13.3 | 38.7 | 16.3 | 8.9 | 10.8 | 13.4 |
| C18:3 | ND | ND | ND | ND | 2.9 | 2.6 | 11.3 | 1.1 | 1.3 | 0.8 | 9.5 | ND | 2.4 | ND | ND | ND |
| C20:0 | ND | ND | 0.8 | 1.2 | 2.5 | 1.1 | ND | 0.6 | 2.3 | 2.6 | 3.7 | 0.9 | 1.7 | 4.8 | 3.5 | 1.5 |
| C20:1 | ND | ND | ND | ND | 2.3 | 1.0 | ND | 0.9 | 0.9 | 7.5 | 2.7 | 0.8 | 1.4 | ND | 0.9 | 0.7 |
| C22:0 | ND | ND | ND | ND | ND | ND | ND | ND | ND | 6.2 | 7.0 | 2.5 | 0.6 | ND | 1.9 | ND |
| C22:1 | ND | ND | ND | ND | ND | ND | ND | ND | ND | 1.1 | ND | ND | ND | ND | ND | 1.6 |
| C24:0 | ND | ND | ND | ND | 1.1 | ND | ND | ND | ND | 4.4 | ND | 0.8 | ND | ND | 0.7 | ND |
| Rest FA | 2.5 | 6.0 | 3.5 | 4.7 | 5.5 | 2.5 | 5.1 | 2.6 | 3.7 | 2.8 | 6.9 | 3.4 | 5.7 | 3.0 | 3.1 | 2.2 |
| tot ≤C12 | 52.6 | 69.0 | 1.3 | 0.0 | 0.9 | 0.0 | 0.0 | 0.0 | 0.0 | 0.0 | 0.0 | 0.0 | 0.0 | 0.0 | 0.0 | 0.6 |
| tot ≤C14 | 69.4 | 77.0 | 5.0 | 4.1 | 1.8 | 0.0 | 0.0 | 0.0 | 0.0 | 0.0 | 0.0 | 0.0 | 0.0 | 0.0 | 0.0 | 0.6 |
| tot ≤C16 | 79.7 | 79.0 | 40.8 | 43.7 | 21.2 | 16.9 | 15.0 | 12.8 | 14.0 | 10.5 | 8.3 | 11.5 | 17.3 | 10.0 | 8.7 | 10.7 |

| oil | Coconut | Palm kernal | Red palm | Palm stearin | Rice oil | Corn | Soy bean | Grape-seed | Sesam | Pea nut | Rape seed | Sunflower | Olive | shea butter | Veg oil B | Veg oil A |
|---|---|---|---|---|---|---|---|---|---|---|---|---|---|---|---|---|
| tot ≥C16 | 28.2 | 17.0 | 91.6 | 91.2 | 92.9 | 97.5 | 95.0 | 97.5 | 96.4 | 97.1 | 93.2 | 96.6 | 94.3 | 97.0 | 96.9 | 97.3 |
| tot C10-C16 | 67.3 | 74.0 | 40.8 | 43.7 | 21.2 | 16.9 | 15.0 | 12.8 | 14.0 | 10.5 | 8.3 | 11.5 | 17.3 | 10.0 | 8.7 | 10.7 |

**Example 2: Free fatty acid release from lipids upon exposure to native patatin.**

In order to assess the stability of different lipids in the presence of patatin, a series of emulsions was prepared from 33 gram per liter demiwater solutions of patatin and an equal amount by weight of lipid. Fats were melted before use, oils were used as is.

*Table 2: Free fatty acid formation of different lipids upon incubation with patatin*

| Substrate | Patatin/blank | Incubation temperature | mmol FFA / kg oil | pAv |
|---|---|---|---|---|
| Coconut oil | Blank | 20 °C | 2 | 0.13 |
| Coconut oil | patatin | 20 °C | 51 | 0.15 |
| Coconut oil | patatin | 40 °C | 89 | 0.76 |
| Corn oil | Blank | 20 °C | 2 | 0.13 |
| Corn oil | patatin | 20 °C | 31 | 0.26 |
| Vegetable fat A | Blank | 20 °C | 3 | 0.39 |
| Vegetable fat A | patatin | 20 °C | 43 | 0.40 |
| Vegetable fat B | Blank | 20 °C | 2 | 0.23 |
| Vegetable fat B | patatin | 20 °C | 53 | 0.39 |
| Grapeseed oil | patatin | 40 °C | 16 | 1.04 |
| Olive oil | Blank | 20 °C | 4 | 1.28 |
| Olive oil | patatin | 20 °C | 12 | |
| Olive oil | patatin | 40 °C | 22 | 1.12 |
| Palm stearin | Blank | 20 °C | 8 | 2.16 |
| Palm stearin | patatin | 20 °C | 38 | 2.41 |
| Palm stearin | patatin | 40 °C | 104 | 6.68 |
| Peanut oil | patatin | 40 °C | 16 | 0.68 |
| Rapeseed oil | patatin | 40 °C | 11 | 0.56 |
| Red palm oil | patatin | 40 °C | 277 | 5.11 |
| Rice oil | Blank | 20 °C | 12 | |
| Rice oil | patatin | 40 °C | 41 | 1.00 |
| Sesame oil | patatin | 40 °C | 12 | 0.82 |
| Shea butter | Blank | 20 °C | 2 | |
| Shea butter | patatin | 20 °C | 28 | |
| Soybean oil | Blank | 20 °C | 2 | 0.23 |
| Soybean oil | patatin | 20 °C | 38 | 0.44 |
| Sunflower oil | Blank | 20 °C | 2 | 0.54 |
| Sunflower oil | patatin | 20 °C | 7 | |
| Sunflower oil | patatin | 40 °C | 15 | 0.65 |

The lipid and water were emulsified by means of an ultraturrax (T18 Ultraturrax with T18N dispersing tool) operating at 10 krpm for 1 minute and these emulsions were incubated at either ambient temperature (20 °C $\pm$ 0.2 °C) or at 40 °C for one day under mild agitation. Blanks were measured at room temperature.

The free fatty acid content of the oils was then determined by titration as described; The pAV was also determined. The results are provided in table 2.

The results in table 2 show that in all cases a higher incubation temperature results in a higher free fatty acid content, which serves as an accelerated test to establish free fatty acid development in a meat substitute. A high free fatty acid content may cause off-taste, for example by the presence of free fatty acids or by further oxidation of free fatty acids.

**Example 3: off-flavor formation in patatin-containing emulsions prepared with various lipids**

Emulsions were prepared from a 10 wt.% solution of patatin in water, by emulsification of the lipid in a patatin solution : lipid wt. ratio of 1 : 2. The emulsions are tested for off-flavor formation by sensoric testing by a panel of trained sensoric testers. The tests were performed immediately after preparation, and after two days of storage at room temperature, mimicking an accelerated cool storage period. The results are shown in table 3.

The results show that lipids with the fatty acid content specified in the text do not result off-flavor immediately after preparation, and are stable to storage. Lipids not in line with this definition result in serious off-flavors, which even gets worse upon storage.

*Table 3: results of sensory tests on patatin-lipid emulsions*

| Lipid | Off flavor after preparation* | Of flavor after storage* |
|---|---|---|
| Sunflower oil | - | - |
| Olive oil | - | - |
| Rapeseed oil | - | - |
| Rapeseed oil - hydrogenated | - | - |
| Corn oil | - | - |
| Soybean oil | - | - |
| Rice oil | - | - |
| Sesame oil | - | - |
| Peanut oil | - | - |
| Grapeseed oil | - | - |
| Vegetable fat A | - | - |
| Vegetable fat B | - | - |
| Coconut oil | ++ | +++ |
| Palm kernel oil | + | + |
| Red palm oil | + | + |
| *- not detected; + detected; ++ medium off flavor; +++ very strong off flavor | | |

Based on the results of examples 2 and 3 combined, it can be concluded that off-taste does not develop provided that the pAV is maintained at 2 or less, preferably 1.5 or less, even more preferably 1 or less. In addition, it can be concluded that off-taste does not develop provided that the release of free fatty acids is generally less than 50 mmol/kg oil, preferably less than 40 mmol./kg oil.

**Example 4: off-flavor formation in patatin-bound meat substitutes prepared with various lipids**

A series of raw-type meat substitutes was prepared using various lipids. The meat substitute was prepared according to the standardized recipe shown below, following a standardized procedure.

The textured plant protein was hydrated and subsequently mixed with the dry ingredients and the sunflower oil in a Hobart mixing machine. A further portion of the variable lipid was introduced (melted where necessary), and further mixed to obtain a homogenous mixture. The mixture was shaped into a burger patty and allowed to solidify.

| Ingredient | Mass % |
|---|---|
| Soy TVP | 21.0 |
| Water | 56.0 |
| Variable lipid | 8.0 |
| Sunflower oil | 3.0 |
| Solanic 200 | 5.0 |
| Potato starch | 3.0 |

(continued)

| Ingredient | Mass % |
|---|---|
| Potato fiber | 2.5 |
| Sodium salt | 1.0 |
| Dextrose | 0.5 |
| **Total** | **100.0** |

Off flavor formation was evaluated by sensoric testing by a panel of trained sensoric testers immediately after preparation, and after two days of storage at room temperature. These conditions mimic an accelerated cool storage period. The results are shown in table 4.

*Table 4: off-flavor formation in meat substitutes prepared with various lipids.*

| Variable lipid | Off flavor after preparation* | Off flavor after storage* |
|---|---|---|
| Sunflower oil | - | - |
| Olive oil | - | - |
| Rapeseed oil | - | - |
| Rapeseed oil - hydrogenated | - | - |
| Corn oil | - | - |
| Soybean oil | - | - |
| Rice oil | - | - |
| Sesame oil | - | - |
| Peanut oil | - | - |
| Grapeseed oil | - | - |
| Vegetable fat A | - | - |
| Vegetable fat B | - | - |
| Coconut oil | +++ | +++ |
| Palm kernel oil | + | ++ |
| Red palm oil | + | ++ |
| *- not detected; +detected; ++ medium off flavor; +++ very strong off flavor | | |

The results show that in meat substitutes which apply native patatin as a binder, lipids as specified herein suppress off-flavor formation.

## Claims

1. A method for making a meat substitute, comprising

   a) providing a mixture comprising water, a denatured protein, native patatin and a lipid, which lipid is defined as a substance comprising fatty acid tri-esters of glycerol;
   b) shaping the meat substitute; and
   c) cooling the meat substitute to a temperature of from -35 °C to 20 °C;

   wherein the fatty acids in said lipid comprise less than 2 % by mass of fatty acids having a chain length of C12 or less, and wherein the lipid comprises one or more of the lipids in the group of a nut oil, a fruit oil, corn oil, soybean oil, sunflower oil, grape seed oil, peanut oil, sesame oil, olive oil, shea butter, cocoa butter, and ricebran oil.

2. A method according to claim 1, wherein the fatty acids comprise less than 2 % by mass of fatty acids having a chain length of C14 or less.

3. A method according to claim 1 or 2, wherein at least 98 % by mass of the fatty acids are fatty acids having a chain length of C12 or higher, preferably C14 or higher.

4. A method according to any of claims 1 - 3, wherein said one or more lipids have been hydrogenated.

5. A method according to any of claim 1 - 4, wherein the lipid provided to the mixture comprises less than 18 mmol per kg lipid of free fatty acids, and/or wherein the total of diacylglycerols and monoacylglycerols, relative to the total lipid, is less than 10 wt.%.

6. A method according to any of claims 1 - 5, wherein the meat substitute is not heated to a temperature above 60 °C prior to cooling.

7. A method according to any of claims 1 - 6, wherein the meat substitute is generally kept at a temperature of from -35 °C to 20 °C throughout the period until cooking the meat substitute, which period is preferably 1 - 14 days, and wherein after the period until cooking and prior to consumption, the meat substitute is heated to a temperature of at least 75 °C for a period of at least 1 minute.

8. A method according to any of claims 1 - 7, wherein the denatured protein is a denatured plant protein, preferably a protein derived a tuber, cereal, nut or legume, which protein is preferably selected from the group consisting of soy protein, pea protein, wheat protein/gluten, potato protein, faba bean protein, mungbean protein, hemp seed protein, mushroom protein, sesame seed protein, sweet potato protein, chick pea protein, lentil protein, oat protein and spelt protein.

9. A method according to any of claims 1 - 8, further comprising including in the mixture one or more salts, such as a salt selected from the group consisting of sodium, potassium or calcium chloride, sodium or potassium glutamate and calcium sulfate, and/or one or more pigments, such as a pigment selected from the group consisting of heme-like pigment, red beet pigment, carotene, caramel, beet juice extract, tomato pigment, radish pigment, paprika pigment and amaranth, and/or one or more fibers, such as a fiber selected from the group consisting of potato fiber, sweet potato fiber, carrot fiber, psyllium fiber, bamboo fiber, soybean fiber, pea fiber, mungbean fiber, tapioca fiber, coconut fiber, banana fiber, cellulose, resistant starch, resistant dextrins, inulin, lignin, chitin, pectin, beta-glucan, and oligosaccharide, and/or one or more texturisers such as a texturizer selected from the group consisting of native starch, modified starch, cellulose derivatives, carrageenan, alginate, agar, konjac, xanthan, and pectin, and/or one or more flavor development aids selected from the group consisting of dextrose, ribose and maltodextrin, and/or one or more flavorings, such as a sweetener selected from the group consisting of sucrose, glucose, fructose, syrup, and artificial sweeteners.

10. A meat substitute comprising water, native patatin, a denatured protein and a lipid, which lipid is defined as a substance comprising fatty acid tri-esters of glycerol, wherein the fatty acids in said lipid comprise less than 2 % by mass of fatty acids having a chain length of C12 or less, and wherein the lipid comprises one or more of the lipids in the group of a nut oil, a fruit oil, corn oil, soybean oil, sunflower oil, grape seed oil, peanut oil, sesame oil, olive oil, shea butter, cocoa butter, and ricebran oil, and wherein preferably, the fatty acids comprise less than 2 % by mass of fatty acids having a chain length of C14 or less.

11. A meat substitute according to claim 10, wherein at least 98 % by mass of the fatty acids are fatty acids having a chain length of C12 or higher, preferably C14 or higher.

12. A meat substitute according to claim 10 or 11, wherein said one or more lipids have been hydrogenated.

13. A meat substitute according to any of claims 10 - 12, wherein the denatured protein is a denatured plant protein, preferably a protein derived a tuber, cereal, nuts or legume, which protein is preferably selected from the group consisting of soy protein, pea protein, wheat protein/gluten, potato protein, faba bean protein, mungbean protein, hemp seed protein, mushroom protein, sesame seed protein, sweet potato protein, chick pea protein, lentil protein, oat protein and spelt protein.

14. A meat substitute according to any of claims 10 - 13, wherein the lipid comprises less than 18 mmol per kg lipid of free fatty acids, and/or wherein the total of diacylglycerols and monoacylglycerols, relative to the total lipid, is less than 10 wt.%.

15. A meat substitute according to any of claims 10 - 14, further comprising one or more salts, such as a salt selected from the group consisting of sodium, potassium or calcium chloride, sodium or potassium glutamate and calcium sulfate, and/or one or more pigments, such as a pigment selected from the group consisting of heme-like pigment, red beet pigment, carotene, caramel, beet juice extract, tomato pigment, radish pigment, paprika pigment and amaranth, and/or one or more fibers, such as a fiber selected from the group consisting of potato fiber, sweet potato fiber, carrot fiber, psyllium fiber, bamboo fiber, soybean fiber, pea fiber, mungbean fiber, tapioca fiber, coconut fiber, banana fiber, cellulose, resistant starch, resistant dextrins, inulin, lignin, chitin, pectin, beta-glucan, and oligosaccharide, and/or one or more texturisers such as a texturizer selected from the group consisting of native starch, modified starch, cellulose derivatives, carrageenan, alginate, agar, konjac, xanthan, and pectin, and/or one or more flavor development aids selected from the group consisting of dextrose, ribose and maltodextrin, and/or one or more flavorings, such as a sweetener selected from the group consisting of sucrose, glucose, fructose, syrup, and artificial sweeteners.

**Patentansprüche**

1. Verfahren zur Herstellung eines Fleischersatzes, umfassend

   a) Bereitstellung einer Mischung, umfassend Wasser, ein denaturiertes Protein, natives Patatin und ein Lipid, wobei das Lipid als eine Substanz definiert ist, umfassend Fettsäuretriester von Glycerin;
   b) Formen des Fleischersatzstoffes; und
   c) Abkühlen des Fleischersatzes auf eine Temperatur von von -35 °C bis 20 °C; wobei die Fettsäuren in dem Lipid weniger als 2 Massenprozent Fettsäuren mit einer Kettenlänge von C12 oder weniger umfassen, und

   wobei das Lipid eines oder mehrere der Lipide aus der Gruppe von einem Nussöl, einem Fruchtöl, Maisöl, Sojaöl, Sonnenblumenöl, Traubenkernöl, Erdnussöl, Sesamöl, Olivenöl, Sheabutter, Kakaobutter und Reiskleieöl umfasst.

2. Verfahren nach Anspruch 1, wobei die Fettsäuren weniger als 2 Massenprozent Fettsäuren mit einer Kettenlänge von C14 oder weniger umfassen.

3. Verfahren nach Anspruch 1 oder 2, wobei mindestens 98 Massenprozent der Fettsäuren, Fettsäuren mit einer Kettenlänge von C12 oder höher sind, vorzugsweise C14 oder höher.

4. Verfahren nach einem der Ansprüche 1 bis 3, wobei das eine oder die mehreren Lipide hydriert worden sind.

5. Verfahren nach einem der Ansprüche 1 bis 4, wobei das für das Gemisch bereitgestellte Lipid weniger als 18 mmol pro kg Lipid an freien Fettsäuren umfasst und/oder wobei die Summe der Diacylglycerine und Monoacylglycerine, bezogen auf das Gesamtlipid, weniger als 10 Gewichtsprozent beträgt.

6. Verfahren nach einem der Ansprüche 1 bis 5, wobei der Fleischersatz vor dem Abkühlen nicht auf eine Temperatur über 60 °C erhitzt wird.

7. Verfahren nach einem Ansprüche 1 bis 6, wobei der Fleischersatz im Allgemeinen während des Zeitraums bis zum Kochen des Fleischersatzes bei einer Temperatur von von -35 °C bis 20 °C gehalten wird, wobei der Zeitraum vorzugsweise 1 bis 14 Tage ist, und wobei nach dem Zeitraum bis zum Kochen und vor dem Verzehr der Fleischersatz auf eine Temperatur von mindestens 75 °C für einen Zeitraum von mindestens 1 Minute erhitzt wird.

8. Verfahren nach einem der Ansprüche 1 bis 7, wobei das denaturierte Protein ein denaturiertes Pflanzenprotein ist, vorzugsweise ein Protein, das aus einer Knolle, einem Getreide, einer Nuss oder einer Hülsenfrucht stammt, wobei das Protein vorzugsweise ausgewählt ist aus der Gruppe bestehend aus Sojaprotein, Erbsenprotein, Weizenprotein/Gluten, Kartoffelprotein, Ackerbohnenprotein, Mungobohnenprotein, Hanfsamenprotein, Pilzprotein, Sesamsamenprotein, Süßkartoffelprotein, Kichererbsenprotein, Linsenprotein, Haferprotein und Dinkelprotein.

9. Verfahren nach einem der Ansprüche 1 bis 8, weiterhin umfassend, Einschließen in die Mischung eines oder mehrere Salze, wie ein Salz, ausgewählt aus der Gruppe bestehend aus Natrium-, Kalium- oder Calciumchlorid, Natrium- oder Kaliumglutamat und Calciumsulfat, und/oder ein oder mehrere Pigmente, wie ein Pigment ausgewählt aus der Gruppe bestehend aus Häm-ähnlichem Pigment, Rote-Beete-Pigment, Karotin, Karamell, Rote-Beete-Saft-Extrakt,

EP 3 944 769 B1

Tomatenpigment, Rettichpigment, Paprikapigment und Amaranth, und/oder ein oder mehrere Fasern, wie eine Faser, ausgewählt aus der Gruppe bestehend aus Kartoffelfaser, Süßkartoffelfaser, Karottenfaser, Psylliumfaser, Bambusfaser, Sojafaser, Erbsenfaser, Mungobohnenfaser, Tapiokafaser, Kokosfaser, Bananenfaser, Cellulose, resistente Stärke, resistenten Dextrinen, Inulin, Lignin, Chitin, Pektin, Beta-Glucan und Oligosacchariden, und/oder ein oder mehrere Texturgeber wie ein Texturgeber, ausgewählt aus der Gruppe bestehend aus nativer Stärke, modifizierter Stärke, Cellulosederivaten, Carrageen, Alginat, Agar, Konjak, Xanthan und Pektin, und/oder einer oder mehrerer Geschmacksbildnerhilfen, ausgewählt aus der Gruppe bestehend aus Dextrose, Ribose und Maltodextrin, und/oder ein oder mehrere Geschmacksstoffe, wie ein Süßungsmittel, ausgewählt aus der Gruppe bestehend aus Saccharose, Glucose, Fructose, Sirup und künstlichen Süßungsmitteln.

10. Fleischersatz, umfassend Wasser, natives Patatin, ein denaturiertes Protein und ein Lipid, wobei das Lipid als eine Substanz definiert ist, umfassend Fettsäuretriester von Glycerin, wobei die Fettsäuren in diesem Lipid weniger als 2 Massenprozent Fettsäuren mit einer Kettenlänge von C12 oder weniger umfassen, und wobei das Lipid eines oder mehrere der Lipide in der Gruppe von Nussöl, Fruchtöl, Maisöl, Sojabohnenöl, Sonnenblumenöl, Traubenkernöl, Erdnussöl, Sesamöl, Olivenöl, Sheabutter, Kakaobutter und Reiskleieöl umfasst, und wobei vorzugsweise die Fettsäuren weniger als 2 Massenprozent der Fettsäuren mit einer Kettenlänge von C14 oder weniger umfassen.

11. Fleischersatz nach Anspruch 10, wobei mindestens 98 Masseprozent der Fettsäuren, Fettsäuren mit einer Kettenlänge von C12 oder höher, vorzugsweise C14 oder höher, sind.

12. Fleischersatznach Anspruch 10 oder 11, wobei das eine oder die mehreren Lipide hydriert worden sind.

13. Fleischersatz nach einem der Ansprüche 10 bis 12, wobei das denaturierte Protein ein denaturiertes Pflanzenprotein ist, vorzugsweise ein Protein, das aus einer Knolle, einem Getreide, Nüssen oder Hülsenfrüchten stammt, wobei das Protein vorzugsweise ausgewählt ist aus der Gruppebestehend aus Sojaprotein, Erbsenprotein, Weizenprotein/Gluten, Kartoffelprotein, Ackerbohnenprotein, Mungobohnenprotein, Hanfsamenprotein, Pilzprotein, Sesamsamenprotein, Süßkartoffelprotein, Kichererbsenprotein, Linsenprotein, Haferprotein und Dinkelprotein.

14. Fleischersatz nach einem der Ansprüche 10 bis 13, wobei das Lipid weniger als 18 mmol pro kg Lipid an freien Fettsäuren umfasst, und/oder wobei die Summe der Diacylglycerine und Monoacylglycerine, bezogen das Gesamtlipid, weniger als 10 Gewichtsprozent beträgt.

15. Fleischersatz nach einem der Ansprüche 10 bis 14, ferner umfassend eines oder mehrere Salze, wie ein Salz, ausgewählt aus der Gruppe bestehend aus Natrium-, Kalium- oder Kalziumchlorid, Natrium- oder Kaliumglutamat und Kalziumsulfat, und/oder ein oder mehrere Pigmente, wie ein Pigment, ausgewählt aus der Gruppe bestehend aus Häm-ähnlichem Pigment, Rote-Bete-Pigment, Karotin, Karamell, Rote-Beete-Saft-Extrakt, Tomatenpigment, Rettichpigment, Paprikapigment und Amaranth, und/oder eine oder mehrere Fasern, wie eine Faser, ausgewählt aus der Gruppe bestehend aus Kartoffelfaser, Süßkartoffelfaser, Karottenfaser und Psylliumfaser, Bambusfaser, Sojafaser, Erbsenfaser, Mungobohnenfaser, Tapiokafaser, Kokosfaser, Bananenfaser, Zellulose, resistenter Stärke, resistenten Dextrinen, Inulin, Lignin, Chitin, Pektin, Beta-Glucan und Oligosacchariden, und/oder ein oder mehrere Texturgeber, wie ein Texturgeber, ausgewählt aus der Gruppe bestehend aus nativer Stärke, modifizierter Stärke, Cellulosederivaten, Carrageen, Alginat, Agar, Konjak, Xanthan und Pektin, und/oder einer oder mehrerer Geschmacksbildnerhilfe, ausgewählt aus der Gruppe bestehend aus Dextrose, Ribose und Maltodextrin, und/oder ein oder mehrere Geschmacksstoffe, wie ein Süßungsmittel, ausgewählt aus der Gruppe bestehend aus Saccharose, Glucose, Fructose, Sirup und künstlichen Süßungsmitteln.

Revendications

1. Méthode de fabrication d'un substitut de viande, comprenant

a) la fourniture d'un mélange comprenant de l'eau, une protéine dénaturée, de la patatine native et un lipide, ledit lipide étant défini comme une substance comprenant des triesters d'acide gras de glycérol ;
b) le façonnage du substitut de viande ; et
c) le refroidissement du substitut de viande à une température de -35 °C à 20 °C ;

dans laquelle les acides gras dans ledit lipide comprennent moins de 2 % en masse d'acides gras présentant une longueur de chaîne de C12 ou moins, et dans laquelle le lipide comprend un ou plusieurs des lipides dans le groupe

16

constitué d'une huile de noix, d'une huile de fruit, d'huile de maïs, d'huile de soja, d'huile de tournesol, d'huile de pépins de raisin, d'huile d'arachide, d'huile de sésame, d'huile d'olive, de beurre de karité, de beurre de cacao, et d'huile de son de riz.

2. Méthode selon la revendication 1, dans laquelle les acides gras comprennent moins de 2 % en masse d'acides gras présentant une longueur de chaîne de C14 ou moins.

3. Méthode selon la revendication 1 ou 2, dans laquelle au moins 98 % en masse des acides gras sont des acides gras présentant une longueur de chaîne de C12 ou plus, de préférence de C14 ou plus.

4. Méthode selon l'une quelconque des revendications 1 à 3, dans laquelle lesdits un ou plusieurs lipides ont été hydrogénés.

5. Méthode selon l'une quelconque des revendications 1 à 4, dans laquelle le lipide fourni au mélange comprend moins de 18 mmol par kg de lipide d'acides gras libres, et/ou dans laquelle le total de diacylglycérols et de monoacylglycérols, par rapport au lipide total, est inférieur à 10 % en poids.

6. Méthode selon l'une quelconque des revendications 1 à 5, dans laquelle le substitut de viande n'est pas chauffé à une température supérieure à 60 °C avant refroidissement.

7. Méthode selon l'une quelconque des revendications 1 à 6, dans laquelle le substitut de viande est généralement maintenu à une température de - 35 °C à 20 °C tout au long de la période jusqu'à la cuisson du substitut de viande, ladite période étant de préférence de 1 à 14 jours, et dans laquelle après la période jusqu'à la cuisson et avant la consommation, le substitut de viande est chauffé à une température d'au moins 75 °C pendant une période d'au moins 1 minute.

8. Méthode selon l'une quelconque des revendications 1 à 7, dans laquelle la protéine dénaturée est une protéine végétale dénaturée, de préférence une protéine dérivée d'un tubercule, d'une céréale, d'une noix ou d'une légumineuse, ladite protéine étant de préférence choisie dans le groupe constitué de protéine de soja, de protéine de pois, de protéine de blé/gluten, de protéine de pomme de terre, de protéine de féverole, de protéine de haricot mungo, de protéine de graines de chanvre, de protéine de champignon, de protéine de graine de sésame, de protéine de patate douce, de protéine de pois chiches, de protéine de lentille, de protéine d'avoine et de protéine d'épeautre.

9. Méthode selon l'une quelconque des revendications 1 à 8, comprenant en outre l'inclusion dans le mélange d'un ou de plusieurs sels, tels qu'un sel choisi dans le groupe constitué de chlorure de sodium, de potassium ou de calcium, de glutamate de sodium ou de potassium et de sulfate de calcium, et/ou d'un ou de plusieurs pigments, tels qu'un pigment choisi dans le groupe constitué de pigment de type hème, pigment de betterave rouge, carotène, caramel, extrait de jus de betterave, pigment de tomate, pigment de radis, pigment de paprika et amaranthe, et/ou une ou plusieurs fibres, telles qu'une fibre choisie dans le groupe constitué de fibre de pomme de terre, fibre de patate douce, fibre de carotte, fibre de psyllium, fibre de bambou, fibre de soja, fibre de pois, fibre de haricot mungo, fibre de tapioca, fibre de noix de coco, fibre de banane, cellulose, amidon résistant, dextrines résistantes, inuline, lignine, chitine, pectine, bêta-glucane et oligosaccharide, et/ou un ou plusieurs agents de texture tels qu'un agent de texture choisi dans le groupe constitué d'amidon natif, amidon modifié, dérivés de cellulose, carraghénane, alginate, gélose, konjac, xanthane et pectine, et/ou un ou plusieurs agents d'aide au développement de l'arôme choisis dans le groupe constitué de dextrose, ribose et maltodextrine, et/ou un ou plusieurs arômes, tels qu'un édulcorant choisi dans le groupe constitué de saccharose, glucose, fructose, sirop et édulcorants artificiels.

10. Substitut de viande comprenant de l'eau, de la patatine native, une protéine dénaturée et un lipide, ledit lipide étant défini comme une substance comprenant des triesters d'acide gras de glycérol, dans lequel les acides gras dans ledit lipide comprennent moins de 2 % en masse d'acides gras présentant une longueur de chaîne de C12 ou moins, et dans lequel le lipide comprend un ou plusieurs des lipides dans le groupe d'une huile de noix, d'une huile de fruit, d'huile de maïs, d'huile de soja, d'huile de tournesol, d'huile de pépins de raisin, d'huile d'arachide, d'huile de sésame, d'huile d'olive, de beurre de karité, de beurre de cacao, et d'huile de son de riz, et dans lequel, de préférence, les acides gras comprennent moins de 2 % en masse d'acides gras présentant une longueur de chaîne de C14 ou moins.

11. Substitut de viande selon la revendication 10, dans lequel au moins 98 % en masse des acides gras sont des acides gras présentant une longueur de chaîne de C12 ou plus, de préférence de C14 ou plus.

**12.** Substitut de viande selon la revendication 10 ou 11, dans lequel lesdits un ou plusieurs lipides ont été hydrogénés.

**13.** Substitut de viande selon l'une quelconque des revendications 10 à 12, dans lequel la protéine dénaturée est une protéine végétale dénaturée, de préférence une protéine dérivée d'un tubercule, d'une céréale, de noix ou d'une légumineuse, ladite protéine étant de préférence choisie dans le groupe constitué de protéine de soja, de protéine de pois, de protéine de blé/gluten, de protéine de pomme de terre, de protéine de féverole, de protéine de haricot mungo, de protéine de graines de chanvre, de protéine de champignon, de protéine de graine de sésame, de protéine de patate douce, de protéine de pois chiches, de protéine de lentille, de protéine d'avoine et de protéine d'épeautre.

**14.** Substitut de viande selon l'une quelconque des revendications 10 à 13, dans lequel le lipide comprend moins de 18 mmol par kg de lipide d'acides gras libres, et/ou dans lequel le total de diacylglycérols et de monoacylglycérols, par rapport au lipide total, est inférieur à 10 % en poids.

**15.** Substitut de viande selon l'une quelconque des revendications 10 à 14, comprenant en outre un ou plusieurs sels, tels qu'un sel choisi dans le groupe constitué de chlorure de sodium, de potassium ou de calcium, de glutamate de sodium ou de potassium et de sulfate de calcium, et/ou d'un ou de plusieurs pigments, tels qu'un pigment choisi dans le groupe constitué de pigment de type hème, pigment de betterave rouge, carotène, caramel, extrait de jus de betterave, pigment de tomate, pigment de radis, pigment de paprika et amaranthe, et/ou une ou plusieurs fibres, telles qu'une fibre choisie dans le groupe constitué de fibre de pomme de terre, fibre de patate douce, fibre de carotte, fibre de psyllium, fibre de bambou, fibre de soja, fibre de pois, fibre de haricot mungo, fibre de tapioca, fibre de noix de coco, fibre de banane, cellulose, amidon résistant, dextrines résistantes, inuline, lignine, chitine, pectine, bêta-glucane et oligosaccharide, et/ou un ou plusieurs agents de texture tels qu'un agent de texture choisi dans le groupe constitué d'amidon natif, amidon modifié, dérivés de cellulose, carraghénane, alginate, gélose, konjac, xanthane et pectine, et/ou un ou plusieurs agents d'aide au développement de l'arôme choisis dans le groupe constitué de dextrose, ribose et maltodextrine, et/ou un ou plusieurs arômes, tels qu'un édulcorant choisi dans le groupe constitué de saccharose, glucose, fructose, sirop et édulcorants artificiels.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017070303 A
- WO 2008069650 A
- WO 97042834 A
- WO 2020089445 A
- WO 2019088834 A
- WO 2018175318 A
- WO 2014007621 A

### Non-patent literature cited in the description

- **HIRSCHBERG et al.** *Eur. J. Biochem*, 2001, vol. 268, 5037
- **GALLIARD et al.** *Biochem. J.*, 1971, vol. 121, 379
- **ANDREWS et al.** *Biochem J.*, 1988, vol. 252, 199
- Standard Methods for the Analysis of Oils, Fats and Derivatives. 1987